Europäisches Patentamt

European Patent Office

Office européen des brevets

(11) Veröffentlichungsnummer: **0 263 180 B1**

(12) **EUROPÄISCHE PATENTSCHRIFT**

(45) Veröffentlichungstag der Patentschrift: **04.03.92**

(51) Int. Cl.⁵: **B23K 20/06**

(21) Anmeldenummer: **86902957.9**

(22) Anmeldetag: **06.03.86**

(86) Internationale Anmeldenummer:
**PCT/SU86/00021**

(87) Internationale Veröffentlichungsnummer:
**WO 87/05245 (11.09.87 87/20)**

(54) **VORRICHTUNG ZUR ZENTRIERUNG ZYLINDRISCHER WERKSTÜCKE BEIM MAGNETIMPULS-SCHWEISSEN.**

(43) Veröffentlichungstag der Anmeldung:
**13.04.88 Patentblatt 88/15**

(45) Bekanntmachung des Hinweises auf die
Patenterteilung:
**04.03.92 Patentblatt 92/10**

(84) Benannte Vertragsstaaten:
**DE FR GB IT**

(56) Entgegenhaltungen:

**A.E. Slukhotsky "Induktory", 1979, Mashin-ostroenie, see page 15, fig. 7**

**A.A. Dudin "Magnitno-implusnaya svarka metallov, 1979, Metallurgia (Moscow), see pages 18-19, fig. 6v, 6d**

**P.I. Orlov "Osnovy konstruirovania" kniga 1, 1977, Mashinostroenie (Moscow), see pages 494-499, 610-611**

(73) Patentinhaber: **INSTITUT ELEKTROSVARKI IMENI E.O.PATONA AKADEMII NAUK UKRAINSKOI SSR**
**ul. Bozhenko, 11**
**Kiev, 252650(SU)**

(72) Erfinder: **CHUDAKOV, Vyacheslav Andreevich**
**ul. Anri Barbjusa, 22/26-48**
**Kiev, 252150(SU)**

(74) Vertreter: **Nix, Frank Arnold, Dr.**
**Kröckelbergstrasse 15**
**W-6200 Wiesbaden(DE)**

## Beschreibung

Die Erfindung bezieht sich auf das Gebiet der Behandlung und Schweissung von Metallen mittels starker Magnetfelder, insbesondere auf eine Vorrichtung zur Zentrierung zylindrischer Werkstücke beim Magnetimpuls-Schweissen und Behandeln von Metallen.

## Zugrundeliegender Stand der Technik

Die Betriebsstabilisierung bei der Schweissung und Behandlung von Metallen ist zur Zeit ein aktuelles Problem, da dadurch eine verringerte Ausschussquote und Materialeinsparung ermöglicht werden. Die Qualität der Behandlung oder Schweissung der zu bearbeitenden Werkstücke hängt von der genauen und dauerhaften Einstellung der technologischen Einrichtungen und der technologischen Ausrüstung ab.

Besonders genau müssen die obenerwähnten Anforderungen bei der Magnetimpuls-Schweissung eingehalten werden, da zum Schweissen nur ein einziger Entladungsimpuls der Kondensatorenbatterie erforderlich ist, während wiederholte Impulse keinen Erfolg ergeben und das Werkstück ausgemustert wird. In Kenntnis der Beeinflussung der Metallbehandlungsqualität durch die Zentrierung arbeiten viele Forscher und Verfahrenstechniker an diesem Problem.

Bekannt ist eine Vorrichtung zur Zentrierung zylindrischer Werkstücke (s. z.B. SU-B A.E.Slukhotsy "Induktory" /Induktoren/, 1965, S. 24), die an den Stirnflächen eines Induktors angebrachte Zentrierscheiben aus Asbestzement enthält.

In den Scheiben sind Bohrungen vorhanden, durch welche Rohre dem Härtebereich zugeführt werden.

Diese Vorrichtung zur Zentrierung der Werkstücke gewährleistet jedoch keine genaue Fixierung des Rohres gemäss der Einführungstiefe in den Induktorbereich, zumal die zu verschweissenden Aussenflächen der Werkstücke bei der Magnetimpuls-Schweissung durch Asbestzement verunreinigt werden.

Die Vorrichtung zur Zentrierung der Rohre gewährleistet darüber hinaus keine zuverlässige Isolierung des zu behandelnden Werkstückes gegen die Induktorwindungen.

## Offenbarung der Erfindung

Der Erfindung liegt die Aufgabe zugrunde, einen solchen Aufbau der Vorrichtung zur Zentrierung zylindrischer Werkstücke beim Magnetimpuls-Schweissen zu schaffen, die eine genaue gegenseitige Fixierung der Werkstücke und genaue Einführungstiefe der Werkstücke in den Arbeitsbereich des Induktors gewährleisten würde, wobei die Vorrichtung einfach, zuverlässig wäre und eine lange Lebensdauer besitzen würde.

Die gestellte Aufgabe wird dadurch erreicht, dass die Vorrichtung zur Zentrierung zylindrischer Werkstücke beim Magnetimpuls-Schweissen, die an den Stirnflächen eines Induktors angebrachte Zentrierscheiben enthält, erfindungsgemäss mit einer inneren und einer äusseren Zentrierhülse versehen ist, die im Induktor gleichachsig und überlappt angeordnet sind, wobei die äussere Zentrierhülse aus einem unpolatisierbaren Dielektrikum mit einem Vorsprung an der Aussenfläche hergestellt ist, an welchen sich eine der Zentrierscheiben anschliesst und denselben fixiert, während die innere Zentrierhülse aus einem unmagnetischen Material mit geringer elektrischer Leitfähigkeit hergestellt ist und an ihrer Innenfläche gestufte profilierte Durchgangsnuten aufweist, an der Aussenfläche aber einen Vorsprung besitzt, der ihre Einführung ins Innere der äusseren Zentrierhülse begrenzt und ihre Fixierung in bezug auf den Induktor mittels der sich an diesen Vorsprung anschliessenden zweiten Zentrierscheibe gewährleistet.

Die Anordnung der äusseren und der inneren Zentrierhülse im Induktor sorgt somit für die äussere Zentrierung der zu verschweissenden Werkstücke in bezug aufeinander.

Die Herstellung der äusseren Zentrierhülse aus einem unpolarisierbaren Dielektrikum gewährleistet eine zuverlässige Isolierung der zu verschweissenden Werkstücke gegen das Arbeitsorgan des Induktors, während der Vorsprung an der Aussenfläche der Zentrierhülse ihre Fixierung in bezug auf den Induktor gewährleistet und die Schweissbetriebsarten stabilisiert.

Die Herstellung der inneren Zentrierhülse aus einem unmagnetischen Material mit geringer elektrischer Leitfähigkeit gewährleistet einen freien Durchgang der magnetischen Kraftlinien zu den zu verschweissenden Werkstücken, wobei die Verluste der elektromagnetischen Energie und die Fixierung der zu verschweissenden Werkstücke auf ein Mindestmass gebracht werden. Das Vorhandensein der gestuften profilierten Durchgangsnuten an der Innenfläche ermöglicht den Austritt von Oxidfilmen und Gasen aus der Schweisszone.

Der Vorsprung an der Aussenfläche der inneren Zentrierhülse begrenzt ihre Einführung in die äussere Zentrierhülse bzw. Verschiebung in bezug auf den Induktor.

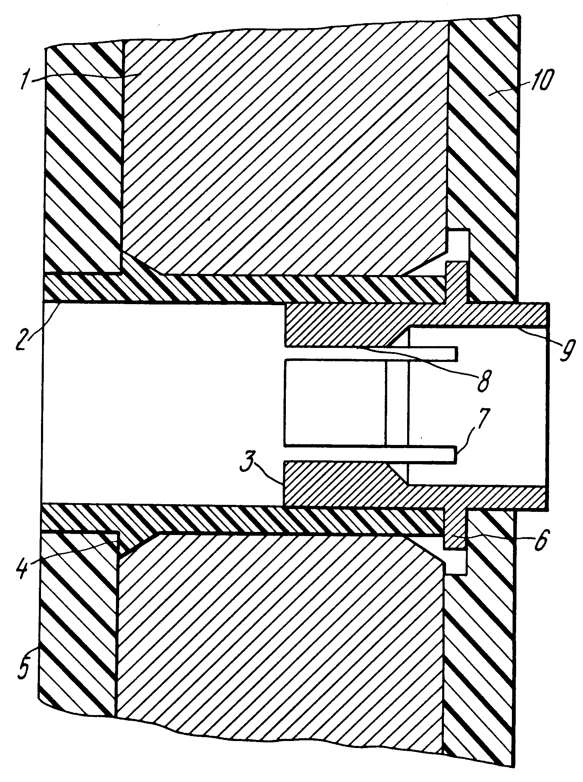

## Kurze Beschreibung der Zeichnung

Nachfolgend wird die Erfindung durch ein Ausführungsbeispiel mit Hinweisen auf die beigelegte Zeichnung näher erläutert, in welcher die Gesamtansicht der erfindungsgemässen Vorrichtung zur Zentrierung zylindrischer Werkstücke beim Magnetimpulsschweissen dargestellt ist.

## Beste Ausführungsform der Erfindung

Die erfindungsgemässe Vorrichtung zur Zentrierung zylindrischer Werkstücke beim Magnetimpuls-Schweissen enthält, in einem Induktor 1 befindlich, eine äussere Zentrierhülse 2 und eine innere Zentrierhülse 3, die gleichachsig und überlappt angeordnet sind.

Die äussere Zentrierhülse 2 ist aus einem unpolarisierbaren Dielektrikum, z.B. aus Fluorkunststoff, hergestellt, wodurch eine zuverlässige Isolierung der (in der Zeichnung nicht dargestellten) zu verschweissenden Werkstücke gegen das Arbeitsorgan des Induktors 1 gewährleistet wird. An der Aussenfläche der Hülse 2 ist in der Nähe der Stirnseite des Induktors 1 ein Vorsprung 4 ausgebildet, an welchen sich eine an der Stirnfläche des Induktors 1 angebrachte Zentrierscheibe 5 anschliesst. Der Vorsprung 4 und die Zentrierscheibe 5 fixieren die äussere Hülse 2 im Arbeitsbereich des Induktors 1 und sichern sie gegen Längsverschiebung.

Die innere Zentrierhülse 3 ist aus einem unmagnetischen Material z.B. Titan oder rostfreiem Stahl hergestellt, an dessen Aussenfläche in der Nähe der Stirnfläche des Induktors 1 ein Vorsprung 6 ausgebildet ist, der die Einführung der Hülse 3 in die äussere Hülse 2 und in den Arbeitsbereich des Induktors 1 begrenzt.

Die Hülse 3 weist an ihrer Innenfläche gestufte Profilnuten 7 auf, die die Wirkung der Wirbelströme verringern und als Kanäle zum Austritt von Oxidfilmen und Gasen aus der Schweisszone dienen.

Die Nuten 7 in der Stufe 8 der Hülse 3 münden in eine einen grösseren Innendurchmesser aufweisende Stufe 9 der Hülse 3.

Die Stufe 8 der Hülse 3 dient zur Verschiebung und Zentrierung der zu verschweissenden Werkstücke und die Stufe 9 zur Verringerung des Widerstandes gegen Gase und Oxidfilme, die sich in den Nuten 7 bewegen.

An den Vorsprung 6 der Hülse 3 schliesst sich eine Zentrierscheibe 10 an, die an der zweiten Stirnfläche des Induktors 1 befestigt ist. Die Scheibe 10 verhindert beliebige mechanische Verzüge und Verschiebungen der Hülse 3.

Es wird nunmehr die Arbeit der Vorrichtung zur Zentrierung der Rohre beim Magnetimpuls-Schweissen behandelt.

Die zum Schweissen vorbereiteten Werkstücke werden in die Vorrichtung eingeführt, wobei das bewegbare Werkstück in die äussere Zentrierhülse 2 bis zum Anschlag an der inneren Zentrierhülse 3 eingeführt wird, während das unbewegbare Werkstück in die Stufe 8 der inneren Zentrierhülse 3 mit Überlappung in bezug auf das bewegbare Werkstück eingeführt wird. Die Stirnseite der Hülse 3 dient als Anschlag für das zu verschweissende bewegbare Werkstück und begrenzt die Tiefe seiner Einführung in die Schweisszone. Diese Fixierung zweier zu verschweissender Werkstücke in der Vorrichtung sorgt für einen zuverlässigen und stabilen Schweissvorgang. Nach der Anordnung der zu verschweissenden Werkstücke in der Vorrichtung erfolgt das Magnetimpuls-Schweissen. Beim Schweissvorgang treten Gase und Oxidfilme frei über die Nuten 7 der inneren Zentrierhülse 3 aus, wobei die Wände der äusseren Zentrierhülse 2 praktisch nicht beeinflusst werden, wodurch die Schweissstabilität gewährleistet und die Standzeit sowohl der äusseren Zentrierhülse 2 als auch der inneren Zentrierhülse 3 wesentlich erhöht wird.

Die vorgeschlagene Vorrichtung zur Zentrierung zylindrischer Werkstücke bei Magnetimpuls-Schweissen ist somit zuverlässig im Betrieb, weist einen einfachen Aufbau auf und gewährleistet ein stabiles Schweissen über den ganzen Umfang der zu verschweissenden zylindrischen Werkstücke.

## Gewerbliche Verwertbarkeit

Die Erfindung ist auf dem Gebiet der Behandlung und Schweissung von Metallen zylindrischer Form mittels starker Magnetfelder anwendbar, die eine breite Verwendung in Herstellung von Kühlanlagen, im Motorenbau, in der Tieftemperaturtechnik und in weiteren Industriezweigen finden.

## Patentansprüche

1. Vorrichtung zur Zentrierung von Rohren beim Magnetimpuls-Schweissen, die an den Stirnflächen eines Induktors angebrachte Zentrierscheiben (5, 10) enthält, dadurch **gekennzeichnet,** dass sie mit einer äusseren und einer inneren Zentrierhülse (2, 3) versehen ist, die im Induktor (1) gleichachsig und überlappt angeordnet sind, wobei die äussere Zentrierhülse (2) aus einem unpolarisierbaren Dielektrikum mit einem Vorsprung (4) an der Aussenfläche hergestellt ist, an welchen sich eine der Zentrierscheiben (5) anschliesst und denselben fixiert, während die innere Zentrierhülse (3) aus einem unmagnetischen Material mit geringer elektrischer Leitfähigkeit hergestellt ist und an ihrer Innenfläche gestufte profilierte Durchgangsnuten (7), an der Aussenfläche aber einen Vorsprung (6) aufweist, der ihre Einführung ins Innere der äusseren Zentrierhülse (2) begrenzt, wobei die Fixierung der Hülse (3) in bezug auf den Induktor (1) mittels der sich an diesen Vorsprung (6) anschliessenden zweiten Zentrierscheibe (10) erfolgt.

## Claims

1. Device for centring pipes in magnetic-discharge welding, which device contains centring discs (5, 10) attached to the end faces of an inductor, characterised in that it is provided with an outer and an inner centring sleeve (2, 3) which are arranged in the inductor (1) coaxially and in an overlapping manner, the outer centring sleeve (2) being made of a non-polarisable dielectric having a projection (4) on the outer surface, on eof the centring discs (5) adjoining the said projection (4) and fixing the same, while the inner centring sleeve (3) is made of a non-magnetic material having a low electrical conductivity and has stepped profiled through-grooves (7) on its inner surface but has a projection (6) on the outer surface, which projection (6) limits the depth to which the sleeve is inserted into the interior of the outer centring sleeve (2), the sleeve (3) being fixed with regard to the inductor (1) by means of the second centring disc (10) adjoining this projection (6).

## Revendications

1. Dispositif pour le centrage de tubes lors du soudage à impulsions magnétiques, qui contient des disques de centrage (5, 10) rapportés sur les faces frontales d'un inducteur, caractérisé en ce qu'il est pourvu d'une douille de centrage externe (2) et d'une douille de centrage interne (3) qui sont montées dans l'inducteur (1) coaxialement et en recouvrement, la douille de centrage externe (2) étant fabriquée en un diélectrique non polarisable avec une saillie (4) sur la surface extérieure, à laquelle est adjacent l'un des disques de centrage (5) qui fixe celle-ci tandis que la douille de centrage interne (3) est fabriquée en une matière non magnétique à faible conductibilité électrique et comporte, sur sa surface intérieure, des rainures traversantes profilées étagées (7) mais une saillie (6) sur la surface extérieure, qui limite son introduction à l'intérieur de la douille de centrage externe (2), la fixation de la douille (3) par rapport à l'inducteur (1) s'effectuant au moyen du second disque de centrage (10) adjacent à cette saillie (6).